# EUROPÄISCHE PATENTSCHRIFT

(11) **EP 0 713 790 B1**
(45) Veröffentlichungstag und Bekanntmachung des Hinweises auf die Patenterteilung: **29.07.1998**
(21) Anmeldenummer: 95890198.5
(22) Anmeldetag: 09.11.1995
(51) Int. Cl.: B60C 11/04, B60C 11/12

(54) **Fahrzeugreifen**
Vehicle tyre
Bandage pneumatique pour véhicule

(30) Priorität: 24.11.1994 AT 2182/94
(43) Veröffentlichungstag der Anmeldung: 29.05.1996
(73) Patentinhaber: Semperit Reifen Aktiengesellschaft, A-2514 Traiskirchen (AT)
(72) Erfinder: Diensthuber, Franz, Ing., A-2544 Schönau (AT)
(74) Vertreter: Vinazzer, Edith, Dipl.-Ing.

(56) Entgegenhaltungen:
- EP-A- 0 233 135
- EP-A- 0 235 072
- EP-A- 0 330 644
- EP-A- 0 466 998
- EP-A- 0 485 883
- FR-A- 2 640 913
- PATENT ABSTRACTS OF JAPAN vol. 017, no. 576 (M-1499), 20.Oktober 1993 & JP-A-05 169918 (OHTSU TIRE & RUBBER CO LTD:THE), 9.Juli 1993,

## Beschreibung

Die vorliegende Erfindung betrifft einen Fahrzeugreifen, insbesondere für den Einsatz unter winterlichen Fahrbedingungen, mit einem Laufstreifenprofil, welches durch Umfangsnuten und Quernuten in Profilelemente, wie Blöcke oder Laufstreifenbänder, gegliedert ist, wobei im Bereich der Laufstreifenränder je eine in Umfangsrichtung verlaufende Schulterblockreihe vorgesehen ist, wobei vorzugsweise sämtliche Profilelemente mit einer Anzahl von innerhalb jedes Profilelementes parallel verlaufenden Feineinschnitten versehen sind, und wobei die zwischen jeder Schulterblockreihe und den zur Laufstreifenmitte zu anschließenden Profilelementen angeordnete Umfangsnut sich aus keilartig verlaufenden Nutabschnitten zusammensetzt, deren sie begrenzenden Block- bzw. Profilelementkanten mit der Mittelumfangslinie der Umfangsnut jeweils einen Winkel einschließen, der zwischen 2° und 15° beträgt.

Reifen, die für den Einsatz unter winterlichen Fahrbedingungen geeignet sind, sind in unterschiedlichen Ausführungsformen bekannt und auch Gegenstand zahlreicher Patente und Patentanmeldungen, beispielsweise ist in der AT-B 390.916 ein Winterreifen beschrieben, der sehr ausgewogene Eigenschaften besitzt.

Aus dem Patent Abstracts of Japan Vol. 017, 576 (M-1499), welcher sich auf die JP-A-05 169918 bezieht, ist weiters ein Fahrzeugreifen der eingangs genannten Art bekannt. Dieser Reifen weist ein Laufstreifenprofil mit schulterseit verlaufenden Umfangsnuten auf, die keilartig verlaufende Nutabschnitte besitzen, um das Traktionsverhalten auf Schnee und die Bremseigenschaften zu verbessern.

Generell läßt sich feststellen, daß es schwierig ist, das Profil eines Winterreifens so zu gestalten, daß auf mit Schnee oder Schneematsch bedeckten Fahrbahnen ein gutes Führungsverhalten, insbesondere im Geradeauslauf und in Kurven, gewährleistet ist, ohne daß andere wichtige Profileigenschaften eines Winterreifens, beispielsweise das Drainagevermögen auf nassem oder matschigem Untergrund, beeinträchtigt werden.

Die Erfindung hat sich daher die Aufgabe gestellt, einen Reifen der eingangs genannten Art insbesondere hinsichtlich des Führungsverhaltens in Schnee und Schneematsch insbesondere auch hinsichtlich des Aufnahme- und Abgabevermögens von Schnee oder Schneematsch zu verbessern, wobei die anderen an einen Winterreifen gestellten Anforderungen, beispielsweise bezüglich des Aquaplaningverhaltens, zumindest gleich gut erhalten bleiben sollen.

Gelöst wird die gestellte Aufgabe erfindungsgemäß dadurch, daß der Winkel, den die die keilartig verlaufenden Nutabschnitte schulterseitig begrenzenden Blockkanten mit der Mittelumfangslinie der Umfangsnut einschließen, größer ist, vorzugsweise um 1 bis 5° größer ist, als der Winkel, den die die keilartig verlaufenden Nutabschnitte begrenzenden weiteren Profilelementkanten mit der Mittelumfangslinie der Umfangsnut einschließen.

Es hat sich herausgestellt, daß durch diese speziell gestalteten Umfangsnuten in diesen Bereichen des Laufstreifens auf Schnee und Schneematsch ein Führungsverhalten des Reifens resultiert, das wesentlich besser ist als bei Reifen, die dort im wesentlichen gerade ausgestaltete Umfangsnuten oder auch zick-zack-förmig verlaufende Umfangsnuten aufweisen. Festgestellt wurde dabei insbesondere eine überraschend geringe Spurrillenempfindlichkeit und ein sehr gutes Seitenführungsverhalten. Diese positiven Effekte dürften vor allem darauf zurückzuführen sein, daß die keilartigen Nutabschnitte Kanten zur Verfügung stellen, die durch ihre Neigung relativ zur Umfangsrichtung ein besonderes Aufnahme- und Abgabevermögen bezüglich Schnee und Schneematsch aufweisen. Dabei ist auch von Bedeutung, welchen Winkel die diese keilartigen Nutabschnitte begrenzenden Profilelementkanten mit der jeweiligen Mittelumfangslinie der Umfangsnut einschließen, und daß diese Winkel unterschiedlich sind.

Von Vorteil ist ferner, wenn die Block- bzw. Profilelementkanten, die auf der einen Seite der Mittelumfangslinie der Umfangsnut die keilartigen Nutabschnitte begrenzen, gegenüber den auf der anderen Seite der Mittelumfangslinie der Umfangsnut verlaufenden Block- oder Profilelementkanten in Umfangsrichtung versetzt sind. Dieser Versatz trägt zu einer Verbesserung im Schneegriff und des Aquaplaningverhaltens bei.

Für eine gute Stabilität des Laufstreifenprofiles ist es günstig, wenn im Mittelbereich des Laufstreifens zwei Blockreihen angeordnet sind, deren Einzelblöcke eine zumindest im wesentlichen parallelogrammförmige Grundgestalt besitzen, wobei die Blöcke in Umfangsrichtung jeweils durch eine Kombination aus jeweils einer Quernut und einem Einschnitt voneinander getrennt sind, wobei jeder Einschnitt eine Breite von 1 bis 2 mm aufweist und eine Tiefe besitzt, die mindestens 1 mm ist und höchstens 80 % der Dessintiefe entspricht, wobei die Einschnitte vorzugsweise in die die beiden Blockreihen trennende Umfangsnut einmünden. Diese Ausgestaltung ist insbesondere für gutes Aquaplaningverhalten und ein gutes Bremsverhalten auf nassem Untergrund von Vorteil.

Bei einer bevorzugten Ausführungsform der Erfindung ist das Laufstreifenprofil als laufrichtungsgebundenes Profil gestaltet. Bei einem solchen Profil hat es sich für die Optimierung des Führungsverhaltens als besonders günstig herausgestellt, wenn die Anordnung der Profilelemente und Blöcke derart erfolgt, daß jeweils der schmale Bereich der keilartigen Nutabschnitte beim Abrollen des Reifens zuerst mit dem Untergrund in Berührung kommt.

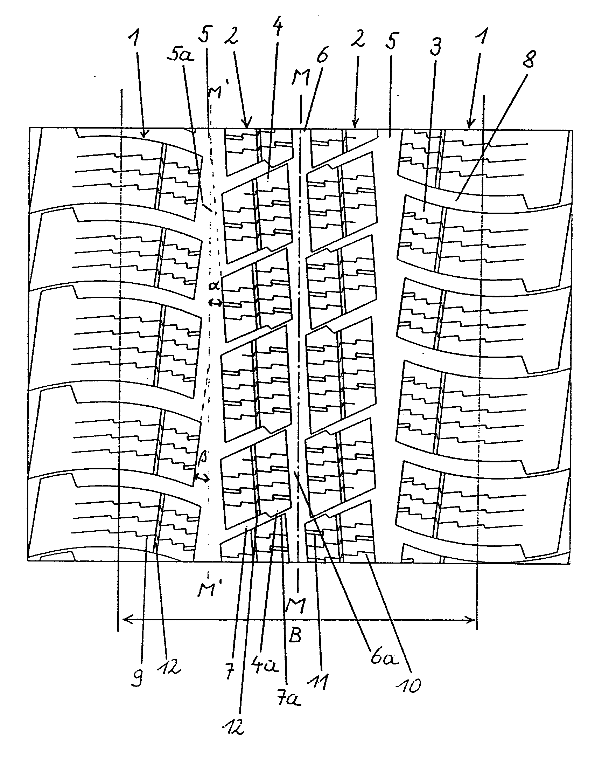

Weitere Merkmale, Vorteile und Einzelheiten der Erfindung werden nun anhand der Zeichnung, die ein Ausführungsbeispiel darstellt, näher beschrieben. Dabei ist in der einzigen Zeichnungsfigur eine Draufsicht auf eine Teilabwicklung eines Ausführungsbeispieles eines Laufstreifenprofiles für einen Fahrzeugluftreifen dargestellt.

Wie die einzige Zeichnungsfigur zeigt, setzt sich das Laufstreifenprofil aus vier Blockreihen zusammen, wobei zwei Schulterblockreihen 1 und zwei zentrale Blockreihen 2 vorgesehen sind. Die Schulterblockreihen 1 verlaufen dabei über den bodenberührenden Teil des Reifens (Laufstreifenbreite B = Breite in der Bodenaufstandsfläche gemäß E.T.R.T.O.-Standards) hinaus.

Die Schulterblockreihen 1 sind durch jene Umfangsnut 5 von der benachbarten zentralen Blockreihe 2 getrennt, die beiden zentralen Blockreihen 2 sind voneinander durch eine weitere mittlere Umfangsnut 6 voneinander getrennt. Die Einzelblöcke 4 in den beiden zentralen Blockreihen 2 besitzen eine parallelogrammförmige Grundgestalt, wobei die der Reifenquerrichtung zugeordneten Blockkanten bei sämtlichen Blöcken 4 innerhalb einer Blockreihe 2 gleich lang sind, die der Reifenumfangsrichtung zugeordneten Blockkanten besitzen infolge der Auslegung des Laufstreifenprofiles mit einer sogenannten Pitchfolge, wobei diese Maßnahme allgemein bekannt ist und zum Stand der Technik gehört, unterschiedliche Blockkantenlängen. Die Anordnung und Ausgestaltung der Blöcke 4 innerhalb der einzelnen Blockreihen 2 erfolgt nun derart, daß die der Umfangsrichtung zugeordneten Kanten unter einem Winkel α von 2 bis 10° relativ zur Äquatorlinie M-M bzw. relativ zu den Mittelumfangslinien M'-M' der Umfangsnuten 5 verlaufen. Da die Blöcke 4 beider Blockreihen 2 gleichsinnig geneigt angeordnet sind besitzt die mittlere Umfangsnut 6 Nutabschnitte 6a, die unter dem genannten Winkel α geneigt sind, wodurch insgesamt der mittleren Umfangsnut 6 eine Art Zick-Zack-Form verliehen wird, mit sehr langen gegenüber der Umfangsrichtung unter dem Winkel α geneigten Nutabschnitten 6a. Innerhalb jeder Blockreihe 2 sind die einzelnen Blöcke 4 durch Quernuten 7 voneinander getrennt, wobei jedoch durch viereckige, insbesondere trapezförmige Blockansätze 4a schmale Einschnitte 7a gebildet werden, die somit einerends in die Quernuten 7 und anderends in die mittlere Umfangsnut 6 münden. Die Einschnitte 7a besitzen eine Breite von 1 bis 2 mm und eine Mindesttiefe von 1 mm, sie können bis auf Dessintiefe, die im allgemeinen 8 mm beträgt, reichen, insbesondere beträgt ihre Tiefe bis zu 80 % der sonstigen Dessintiefe. Durch die Einschnitte 7a werden die Einzelblöcke 4 jeder Blockreihe 2 aneinander gekoppelt, was dem Laufstreifenprofil in diesem Bereich eine Stabilität verleiht, die sich als vorteilhaft beim Fahren auf nassem Untergrund herausgestellt hat.

Die Blöcke 3 der Schulterblockreihen 1 sind durch Quernuten 8 voneinander getrennt und besitzen ebenfalls im wesentlichen eine parallelogrammförmige Grundgestalt, wobei die die Quernuten 8 begrenzenden Kanten leicht gebogen ausgeführt sind. Die die Umfangsnuten 5 begrenzenden Kanten verlaufen unter einem Winkel β von 3 bis 15° zur Äquatorlinie M-M, jedoch gegensinnig zu den diese Umfangsnut 5 begrenzenden Kanten der Blöcke 4 der mittleren Blockreihen 2. Dadurch setzt sich jede Umfangsnut 5 aus keilartig zusammenlaufenden Nutabschnitten 5a zusammen.

Sämtliche Blöcke 3, 4 sind jeweils mit einer Anzahl von Feineinschnitten versehen, die in jedem Block 3, 4 zumindest im wesentlichen parallel verlaufen und im dargestellten Ausführungsbeispiel als in Draufsicht etwa zick-zack-förmige Feineinschnitte gestaltet sind. Diese Feineinschnitte besitzen eine Breite von 0,3 bis 0,8 mm, insbesondere von 0,4 mm. Die Feineinschnitte können zumindest teilweise auch als in Draufsicht gerade verlaufende Feineinschnitte ausgebildet werden. Die Feineinschnitte 9 in den Blöcken 3 der Schulterblockreihen 1 haben dabei einen Verlauf, der etwa dem Verlauf der die Quernuten 8 begrenzenden Kanten dieser Blöcke 3 entspricht, die Feineinschnitte 10 in den Blöcken 4 der zentralen Blockreihen 2 besitzen einen Gesamtverlauf, der zumindest im wesentlichen der Profilquerrichtung entspricht und verlaufen daher innerhalb dieser Blöcke 4 nicht parallel zu den die Quernuten 7 begrenzenden Blockkanten. Diese Maßnahme wirkt sich günstig auf die Griffeigenschaften des Profiles auf schneebedeckten Fahrbahnen aus. Der Großteil der Feineinschnitte 9, 10 ist so ausgeführt, daß sie die jeweiligen Blöcke komplett durchsetzen. Dabei kann es aus Stabilitätsgründen von Vorteil sein, wenn die Feineinschnitte 9, 10 nicht sämtlich bis zum Nutgrund reichen sondern vor allem im Bereich ihrer Einmündungen in Umfangsnuten eine geringere Tiefe aufweisen. Ein Teil dieser Feineinschnittendbereiche, die in die Umfangnsuten einmünden, ist jeweils von einem Zusatzeinschnitt 11 überlagert, welcher etwa eine Breite von1 mm und auch eine Tiefe in dieser Größenordnung aufweist. Die Zusatzeinschnitte 11 stellen somit zusätzliche Griffkanten zur Verfügung. In den Blöcken 4 der zentralen Blockreihen 2 sind dabei diese Zusatzeinschnitte 11 jeweils wechselseitig an einem der Enden von in Umfangsrichtung benachbarten Feineinschnitten 10 vorgesehen.

Wie aus der Zeichnungsfigur ferner ersichtlich ist, sind sämtliche Blöcke 3, 4 mit die Feineinschnitte 9, 10 entlüftenden Nuten 12 versehen. Diese Entlüftungsnuten 12 durchsetzen jeden Block 3, 4 im wesentlichen in Umfangsrichtung verlaufend und kreuzen dabei sämtliche Feineinschnitte 9, 10. Wie bekannt wird diese Maßnahme aus Geräuschgründen gesetzt.

Die Erfindung ist auf das dargestellte Ausführungsbeispiel nicht eingeschränkt. So ist es insbesondere möglich, ein nach der Erfindung gestaltetes Profil auch als sogenanntes laufrichtungsgebundenes Profil zu gestalten. In diesem Fall ergibt sich eine Umfangsnutstruktur, bei der bei einem Profil mit vier Blockreihen sämtliche Umfangsnuten keilartige Nutabschnitte haben, die auch sämtlich, bezüglich einer der Umfangsrichtungen betrachtet, gleich orientiert wären. Dabei sollte die Anordnung insbesondere so getroffen werden, daß jeweils der schmale Bereich der keilartigen Nutabschnitte beim Abrollen des Reifens zuerst mit dem Untergrund in Berührung kommt. Es ist ferner möglich, anstelle der zentralen Blockreihen Laufstreifenbänder vorzusehen, die ggf. durch Sacknuten strukturiert sind.

## Patentansprüche

1. Fahrzeugreifen, insbesondere für den Einsatz unter winterlichen Fahrbedingungen, mit einem Laufstreifenprofil, welches durch Umfangsnuten und Quernuten in Profilelemente, wie Blöcke oder Laufstreifenbänder, gegliedert ist, wobei im Bereich der Laufstreifenränder je eine in Umfangsrichtung verlaufende Schulterblockreihe vorgesehen ist, wobei vorzugsweise sämtliche Profilelemente mit einer Anzahl von innerhalb jedes Profilelementes parallel verlaufenden Feineinschnitten versehen sind, und wobei die zwischen jeder Schulterblockreihe und den zur Laufstreifenmitte zu anschließenden Profilelementen angeordnete Umfangsnut sich aus keilartig verlaufenden Nutabschnitten zusammensetzt, deren sie begrenzenden Block- bzw. Profilelementkanten mit der Mittelumfangslinie der Umfangsnut jeweils einen Winkel einschließen, der zwischen 2° und 15° beträgt, dadurch gekennzeichnet, daß der Winkel (β), den die die keilartig verlaufenden Nutabschnitte (5a) schulterseitig begrenzenden Blockkanten mit der Mittelumfangslinie der Umfangsnut (5) einschließen, größer ist, vorzugsweise um 1 bis 5° größer ist, als der Winkel (α), den die die keilartig verlaufenden Nutabschnitte (5a) begrenzenden weiteren Profilelementkanten mit der Mittelumfangslinie der Umfangsnut (5) einschließen.

2. Fahrzeugreifen nach Anspruch 1, dadurch gekennzeichnet, daß die Block- bzw. Profilelementkanten, die auf der einen Seite der Mittelumfangslinie der Umfangsnut (5) die keilartigen Nutabschnitte (5a) begrenzen, gegenüber den auf der anderen Seite der Mittelumfangslinie der Umfangsnut (5) verlaufenden Block- oder Profilelementkanten in Umfangsrichtung versetzt sind.

3. Fahrzeugreifen nach Anspruch 1 oder 2, dadurch gekennzeichnet, daß im Mittelbereich des Laufstreifens zwei Blockreihen (2) angeordnet sind, deren Einzelblöcke (4) eine zumindest im wesentlichen parallelogrammförmige Grundgestalt besitzen, wobei die Blöcke (4) in Umfangsrichtung jeweils durch eine Kombination aus jeweils einer Quernut (7) und einem Einschnitt (7a) voneinander getrennt sind, wobei jeder Einschnitt (7a) eine Breite von1 bis 2 mm aufweist und eine Tiefe besitzt, die mindestens 1 mm beträgt, wobei die Einschnitte (7a) vorzugsweise in die die beiden Blockreihen trennende Umfangsnut (6) einmünden.

4. Fahrzeugreifen nach einem der Ansprüche 1 bis 3 mit einem laufrichtungsgebundenen Laufstreifenprofil, dadurch gekennzeichnet, daß jeweils der schmale Bereich der keilartigen Nutabschnitte beim Abrollen des Reifens zuerst mit dem Untergrund in Berührung kommt.

## Claims

1. Vehicle tyre, more especially for use in wintry travel conditions, having a tread strip profile, which is divided into profile elements, such as blocks or tread strip bands, by means of circumferential grooves and transverse groves, a row of shoulder blocks being provided in the region of each of the tread strip edges and extending in the circumferential direction, preferably all of the profile elements being provided with a number of fine incisions which extend parallel to one another within each profile element, and the circumferential groove, which is disposed between each row of shoulder blocks and the profile elements which lie adjacent to the tread strip centre, comprising groove portions which extend in a wedge-like manner, the block or profile element edges of said groove portions, which define the edges, forming with the circumferential centre line of the circumferential groove a respective angle which is between 2° and 15°, characterised in that the angle (β), which is formed between the block edges, which define on the shoulder side the wedge-like extending groove portions (5a), and the circumferential centre line of the circumferential groove (5), is greater, preferably greater by between 1° and 5°, than the angle (α) which is formed between the additional profile element edges, which define the wedge-shaped extending groove portions (5a), and the circumferential centre line of the circumferential groove (5).

2. Vehicle tyre according to claim 1, characterised in that the block or profile element edges, which define the wedge-like groove portions (5a) on one side of the circumferential centre line of the circumferential groove (5), are offset relative to the block or profile element edges, which extend on the other side of the circumferential centre line of the circumferential groove (5), when viewed with respect to the circumferential direction.

3. Vehicle tyre according to claim 1 or 2, characterised in that two rows of blocks (2) are disposed in the central region of the tread strip, the individual blocks (4) of said rows having a basic configuration which is at least substantially parallelogram-shaped, the blocks (4) being separated from one another, when viewed with respect to the circumferential direction, by a respective combination of a transverse groove (7) and an incision (7a), each incision (7a) comprising a width of between 1 mm and 2 mm and having a depth which is at least 1 mm, the incisions (7a) preferably extending into the circumferential groove (6), which separates the two rows of blocks.

4. Vehicle tyre according to one of claims 1 to 3, having a tread strip profile which is adapted to the direction of travel, characterised in that the narrow region of each of the wedge-like groove portions comes into contact initially with the underlying ground during the rolling movement of the tyre.

## Revendications

1. Pneumatique pour véhicule, notamment destiné à être utilisé dans des conditions de conduite en hiver, comportant une sculpture de bande de roulement qui est subdivisée par des rainures circonférentielles et par des rainures transversales en des éléments de sculpture tels que des blocs ou des rubans de la bande de roulement, et dans lequel respectivement une rangée de blocs d'épaulement qui s'étend dans la direction circonférentielle est prévue dans la zone des bords de la bande de roulement, auquel cas de préférence tous les éléments profilés sont pourvus d'un nombre de fines entailles qui s'étendent parallèlement à l'intérieur de chaque élément de la sculpture, et dans lequel la rainure circonférentielle qui est située entre chaque rangée de blocs d'épaulement et les éléments profilés voisins du centre de la bande de roulement se compose de tronçons de rainures qui s'étendent en forme de coin et dont les arêtes de blocs ou d'éléments de sculpture qui délimitent ces tronçons de rainures font avec la ligne médiane circonférentielle de la rainure circonférentielle un angle respectif qui est compris entre 2° et 15°, caractérisé en ce que l'angle (β) que les arêtes de blocs qui limitent du côté de l'épaulement les tronçons de rainures (5a) qui s'étendent en forme de coin font avec la ligne médiane circonférentielle de la rainure circonférentielle (5), est supérieur, et ce de préférence de 1 à 5°, à l'angle (α) que les autres arêtes des éléments de la sculpture qui délimitent les tronçons de rainures (5a) s'étendant en forme de coin font avec la ligne médiane circonférentielle de la rainure circonférentielle (5).

2. Pneumatique pour véhicule selon la revendication 1, caractérisé en ce que les arêtes des blocs ou des éléments profilés qui limitent les tronçons de rainures en forme de coin (5a), d'un côté de la ligne médiane circonférentielle de la rainure circonférentielle (5), sont décalés dans la direction circonférentielle par rapport aux arêtes de blocs ou d'éléments profilés qui s'étendent de l'autre côté de la ligne médiane circonférentielle de la rainure circonférentielle (5).

3. Pneumatique pour véhicule selon la revendication 1 ou 2, caractérisé en ce que dans la zone médiane de la bande de roulement sont disposées deux rangées de blocs (2) dont les blocs individuels (4) possèdent une configuration de base au moins essentiellement en forme de parallélogramme, les blocs (4) étant séparés les uns des autres dans la direction circonférentielle respectivement par une combinaison formée d'une rainure transversale (7) et d'une entaille (7a), chaque entaille (7a) possédant une largeur de 1 à 2 mm et une profondeur qui est égale au moins à 1 mm, les entailles (7a) débouchant de préférence dans la rainure circonférentielle (6) séparant les deux rangées de blocs.

4. Pneumatique pour véhicule selon l'une des revendications 1 à 3, comportant un profil de bande de roulement qui est lié à la direction de déplacement, caractérisé en ce que respectivement la partie étroite des tronçons de rainures en forme de coin vient en premier en contact avec le sol lors du roulement du pneumatique.
